# EUROPEAN PATENT SPECIFICATION

(11) **EP 0 447 610 B1**
(45) Date of publication and mention of the grant of the patent: **25.05.1994**
(21) Application number: 90117667.7
(22) Date of filing: 13.09.1990
(51) Int. Cl.: G09F 19/18

(54) **Automatic follow-up projection system**
Projektionssystem mit automatischem Nachlauf
Système de projection avec suivi automatique

(30) Priority: 19.02.1990 JP 37943/90
(43) Date of publication of application: 25.09.1991
(73) Proprietor: DENTSU PROX INC., Chuo-ku Tokyo (JP); AOI STUDIO CO., LTD., Tokyo (JP)
(72) Inventor: Miyamoto, Takashi, c/o AOI Studio Co., Ltd., Tokyo (JP); Miyagawa, Kazuya, c/o AOI Studio Co., Ltd., Tokyo (JP); Tomimatsu, Yukihito, c/o AOI Studio Co., Ltd., Tokyo (JP); Sugiura, Tsutomu, c/o Dentsu Prox Inc., Tokyo (JP); Nishi, Kenji, c/o Dentsu Prox Inc., Tokyo (JP); Ichihara, Taku, c/o Dentsu Prox Inc., Tokyo (JP)
(74) Representative: Klunker . Schmitt-Nilson . Hirsch

(56) References cited:
- DE-A- 3 202 432
- FR-A- 614 464
- QUANTUM ELECTRONICS; PROCEEDINGS OF THE THIRD INTERNATIONAL CONGRESS, Dunod, Paris, 1964, pages 1319-1332; H.H. PLOTKIN: "The S-66 laser satellite tracking experiment"

## Description

### BACKGROUND OF THE INVENTION

### 1 . Field of the Invention

This invention relates to an automatic follow-up projection system capable of automatically tracking a moving object to project a picture, an animation, characters and the like at a predetermined position thereon. The automatic follow-up projection system according to this invention is able to automatically track the moving object and effect image projecting, so that this system can be widely used as a medium for advertizing, news or the like which is image-projected on an airship or a balloon floating in the air from the roof of such as a building.

### 2. Description of the Prior Art

In conventional image projecting apparatus, an image is projected at a predetermined position on a fixed object such as a screen or the like by a slide projector, a cinema projector or the like which includes a luminous source. Because the object is fixed or cannot move, it is necessary for a viewer to come to the position or the vicinity thereof for the purpose of watching a projected image. Conventionally image projecting is seldom performed with a moving screen or the like, and if it has been needed, the image projecting apparatus is manually directed on to the moving object such as the screen.

Making commercials or advertisements by projecting an image onto a balloon or an airship is known. FR-A-614 464, for example, discloses a balloon in the shape of an aeroplane carrying a board or screen. A projector is manually positioned such that the image from the projector appears on the screen attached to the balloon. However, it is a difficult operation to project an image onto an object under such conditions where the object, for an instance in case of a balloon, moves considerably and changes directions frequently. In this situation, it has been a very important assignment to improve the operability of the projection apparatus. Consequently, an apparatus which is not the kind operated mannually, but instead allows automatic tracking so as to project an image accurately in response to the movement of a moving object, has been strongly desired.

### SUMMARY OF THE INVENTION

This invention was made in consideration of the circumstances mentioned above and the object of this invention is to provide an automatic follow-up projection system, particularly for the case where it is necessary to project an image on a moving object, which can be fully automatically operated so as to reduce a great deal of the labour for operators, and ensure accurate projection by the smooth and steady automatic tracking in response to the movement of an object.

According to one aspect of this invention, for achieving the objects described above, there is provided an automatic follow-up projection system comprising: a turntable which can rotate arbitrarily in a horizontal direction and in a vertical direction in response to a moving object provided with a light emitting member, an image projecting apparatus which is mounted on the turntable having directivity so as to project an image at a predetermined position of the moving object, an image pick-up means having a field of view catching the above-mentioned light emitting member, and a calculating control means connected to the image pick-up means and the turntable in order to drive and control the turntable in a manner of processing light quantity signals obtained from said light emitting member by the image pick-up means and calculating for tracking the moving object.

According to another aspect of this invention, there is provided an automatic follow-up projection system comprising; a turntable which can rotate arbitrarily in a horizontal direction and in a vertical direction in response to a moving object having a reflective member, an image projecting apparatus which is mounted on the turntable having directivity so as to project an image at the predetermined position of the moving object, an infrared ray irradiating means mounted on the turntable for irradiating infrared rays onto the reflective member, an infrared ray image pick-up means having a field of view catching infrared rays reflected from the reflective member, and a calculating control means connected to the infrared image pick-up means and the turn table in order to drive and control the turntable in a manner of processing amount of the infrared rays and calculating for tracking the moving object.

The nature, principle and utility of the invention will become more apparent from the following detailed description when read in conjunction with the accompanying drawings.

### BRIEF DESCRIPTION OF THE DRAWINGS

In the accompanying drawings:
FIG.1 shows a schematic configuration according to this invention;
FIG.2 shows a block diagram of a control system according to this invention;
FIG.3 shows a relation between video signals and images;
FIG.4 shows a time chart illustrating an example associated with an input-output of a timing generating circuit;
FIG.5 shows a block diagram illustrating an example of an accumulating circuit;
FIG.6 shows a block diagram illustrating an area counting circuit;
FIG.7 shows a relation between a center position of figure on an infrared ray radiating member and a target position;
FIG.8 shows a flow chart illustrating an example of calculations by software; and
FIG.9 to FIG.11 show respectively a schematic configuration of another embodiment according to this invention.

### DESCRIPTION OF THE PREFERRED EMBODIMENTS

Embodiments according to this invention are described hereinafter based on the attached drawings.

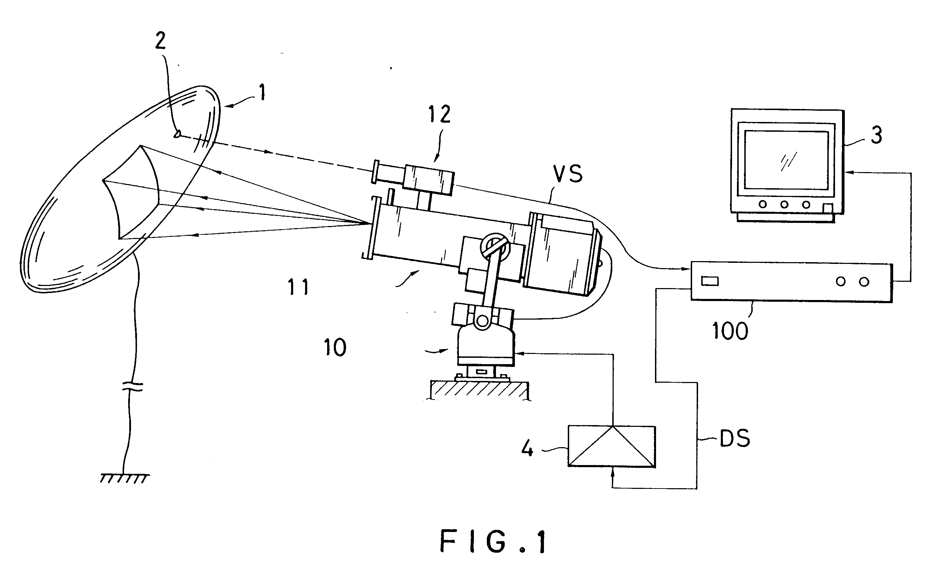

FIG.1 shows a schematic configuration according to this invention and an infrared ray radiating member 2 for being tracking is attached at a predetermined position on an object 1 such as a ballooon or the like. The infrared ray radiating member 2 may be whatever irradiates infrared rays to an infrared ray image pick-up unit 12 positioned in the coaxial direction of an image projecting unit 11 (such as a slide or cinema projector, in addition, a laser beam projector, a video projector or the like) . An image is projected on the object 1 by the directional image projecting unit 11 provided on an electrically-driven turn table 10, and the infrared ray image pick-up unit 12 having a field of view catching the infrared ray radiating member 2 is fixed on the image projecting unit 11 in one body. The image projecting unit 11 can project arbitrarily in horizontal and vertical directions with exact directivity by driving the electrically-driven turntable 10. Video signals VS from the infrared ray image pick-up unit 12 are image-processed by an image processing apparatus 100 which is explained hereinafter, and the processed image frame is displayed on a monitor 3 such as a CRT and the like. Drive signals DS processed by the image processing apparatus 100 drive the turntable 10 via a driving section 4 of an amplifier or the like to control the projecting position of the image projecting unit 11, so as to track the shift of the object 1, the infrared ray radiating member 2, or the target point keeping a fixed distance away from the object 1 and the infrared ray radiating member 2.

When the infrared ray radiating member 2 attached on the object 1 irradiates infrared rays to the infrared ray image pick-up unit 12 positioned in the coaxial direction of the image projecting unit 11, the infrared ray image pick-up unit 12 attached to the image projecting unit 11 catches a high luminous point as an image and the video signals VS are binarized in the image processing apparatus 100. A central value of a primary moment on a binary image is calculated in real time, for example, every 1/60 second, and signals corresponding to the movement amount are transmitted on the basis of the positional data to the electrically-driven turn table 10 of the image projecting unit 11 via the driving section 4. The electrically-driven turn table 10 is controlled by the transmitted signals so that the projecting direction of the image projecting unit 11 may be automatically changed and automatic follow-up projection may be carried out for the moving object 1, the infrared ray radiating member 2 or the target point keeping a fixed distance away from the object 1 and the infrared ray radiating member 2.

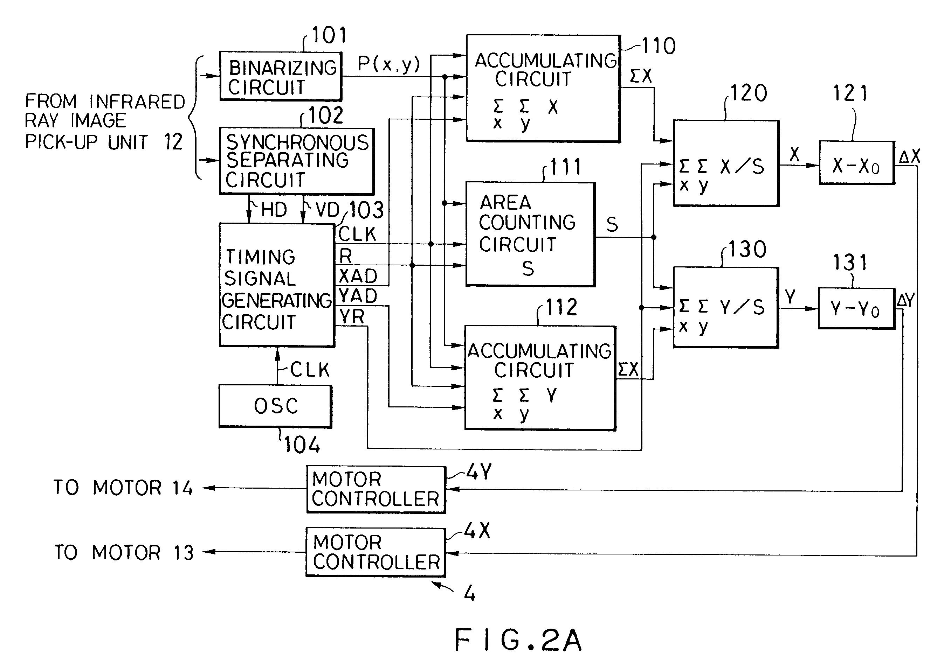

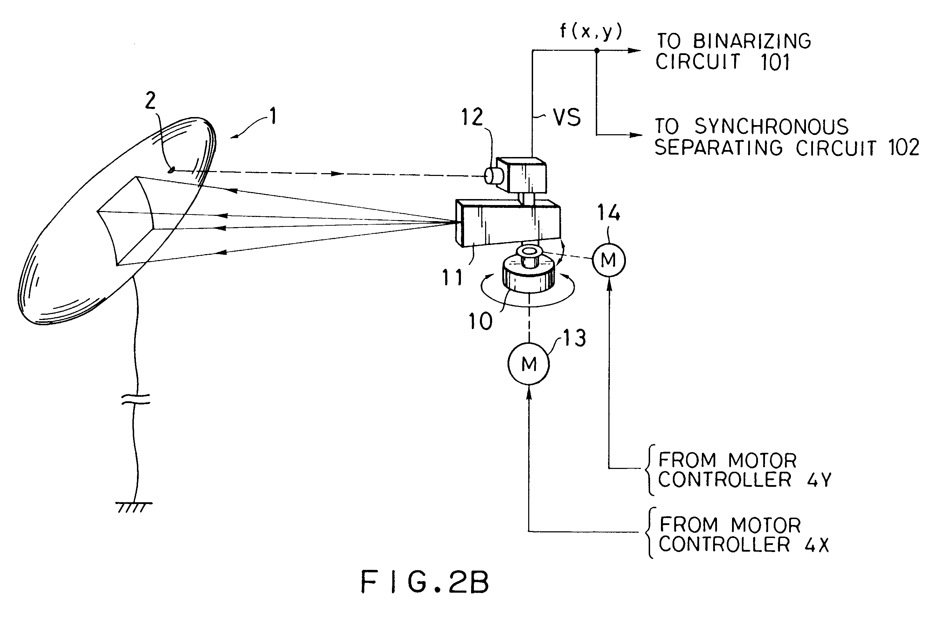

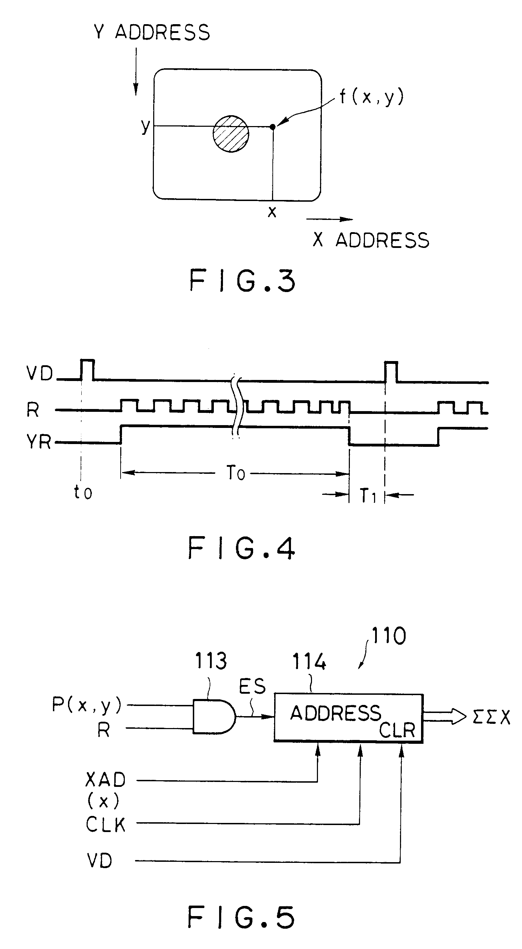

In FIG.2, the image processing apparatus 100 is mainly described in details, the image projecting unit 11 mounted on the electrically-driven turn table 10 is rotated in the horizontal direction by a motor 13, and in the vertical direction by a motor 14. A projecting operation in arbitrary directions can be carried out in combination with these rotations. An infrared ray image pick-up unit 12 of which an image pick-up part is provided with a lens system having a field of view covering a part of whole part of a directional region of the image projecting unit 11, outputs a two dimensional address information f (x, y) as video signals VS in time series. The video signals VS are inputted to a binarizing circuit 101, and converted into binary signals P (x, y) represented by "0" or "1" with a predetermined threshold level T. FIG.3 shows a relation between image information (oblique line part) and X-Y address, and illustrates that f (x, y) is a video signal VS on an address x and an address y. In the binarizing circuit 101, if f (x, y) ≧ T (threshold level) then P (x, y)=1, if F (x, y)<T then P (x, y)=0.

The video signals VS are inputted to a synchronous separating circuit 102 in which they are divided into horizontal synchronous signals HD and vertical synchronous signals VD, and these divided signals HD and VD are inputted into a timing signal generating circuit 103. Clock signals CLK from a clock generating circuit 104 have been inputted into the timing signal generating circuit 103 and the clock signals CLK have been outputted at the timing in response to the horizontal resolution of an image. The timing signal generating circuit 103 outputs the clock signals CLK which are inputted into accumulating circuits 110, 112 and an area counting circuit 111, and outputs signals R indicating a measuring region of the image information and similarly outputted signals R are inputted into the accumulating circuit 110, 112 and the area counting circuit 111. Further, the timing generating circuit 103 generates horizontal address signals XAD to input them into the accumulating circuit 110, and also generates vertical address signals YAD to input them into the accumulating circuit 112, thereby generating signals YR indicating the completion of measuring to input them into calculating circuits 120 and 130. The timings for the vertical synchronous signals, the signals R indicating the measuring region, and the signals YR indicating the completion of measuring are shown in FIG.4.

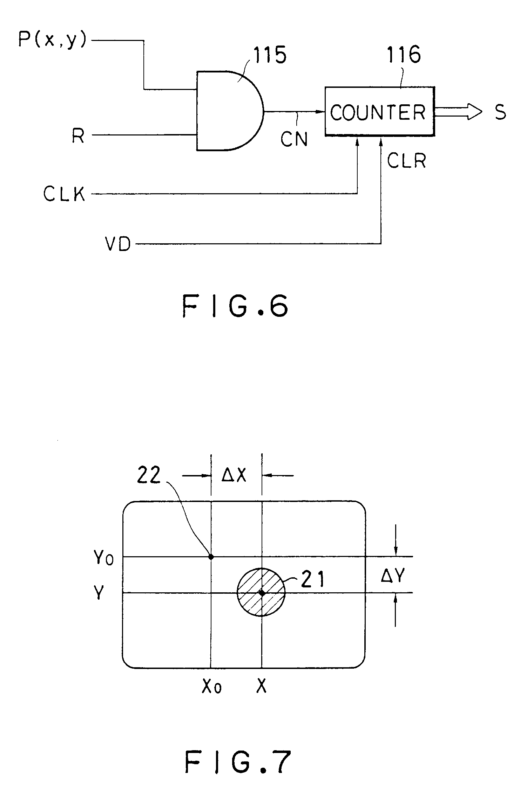

The accumulating circuit 110 calculates ΣΣX. Both circuits 110 and 112 are of the same configuration. That is, the accumulating circuit 110 as shown in FIG.5 comprises an AND circuit 113 and an adding circuit 114 and the adding circuit 114 is activated to add the address signals XAD sequentially at the timing of the clock signals CLK only when the both binary signal P (x, y) and signals R indicating the measuring region are "1" and an enable signal ES is also "1". The adding circuit 114 is also cleared by inputting the vertical synchronous signal VD, and the added output ΣΣX representes ΣΣP (x, y) x x. Similarly, the output ΣΣY of the accumulating circuit 112 represents ΣΣP (x, y) x y. These added values ΣX and ΣY are inputted into the calculating circuits 120 and 130 respectively. The configuration of the area counting circuit 111 is as shown in FIG.6, a counter 116 to be cleared by the vertical synchronous signals VD, counting with the clock signals CLK the output CN from the AND circuit 115 into which the binary signals P (x, y) and the signals R indicating the measuring region are inputted, outputs are S as a counted value. The counted area S is inputted into the calculating circuits 120 and 130.

The calculating circuits 120 and 130 divide the accumulated result (a primary moment) for X axis and Y axis, respectively, by the area S (the moment of the zero degree) after the signals YR indicating the completion of the measuring are inputted. Then, the center position of the infrared ray radiating member 2 is calculated to output X (= ΣΣX/S) and Y (= ΣΣY/S), thereby renewing the output values. FIG.4 shows the circumstances, wherein the S, ΣX, ΣY are initialized by the input of the vertical synchronous signals VD (at the time points t₀ and t₁), and the S, ΣX, ΣY are measured during the time span T₀, and the measured values are renewed during the time span T₁.

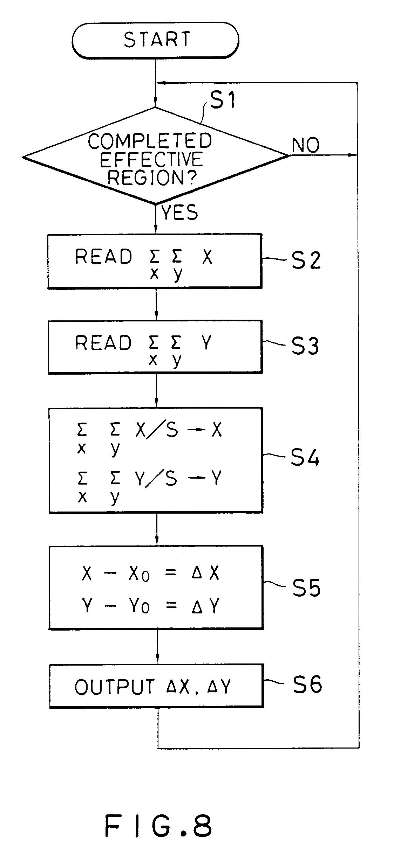

Calculating circuits 121 and 131 calculate the differences ΔX and ΔY between the center position 21 of the infrared ray radiating member 2 and the target position 22 as shown in FIG.7. Generally, the center position 21 of the infrared ray radiating member 2 corresponds with the target position 22, though it is also allowed that tracking operation may be carried out keeping a fixed distance away from the infrared ray radiating member 2. The differences ΔX and ΔY calculated by the calculating circuits 121 and 131 are inputted into motor controllers 4X and 4Y respectively, and the motor controllers 4X and 4Y drive motors 13 and 14 respectively. The differences after the operation described above are fed back so that a deviation between the target position 2 and the center of an image becomes to zero. It is noted that the target position for projecting can be changed adding a setting device capable of setting a position from outside. The configuration as mentioned above is all provided with hardwares by using the calculating circuits 120, 121 and 130, 131, though a configuration with software can be also possible by using such as a micro-computor in accordance with a flow chart shown in FIG.8.

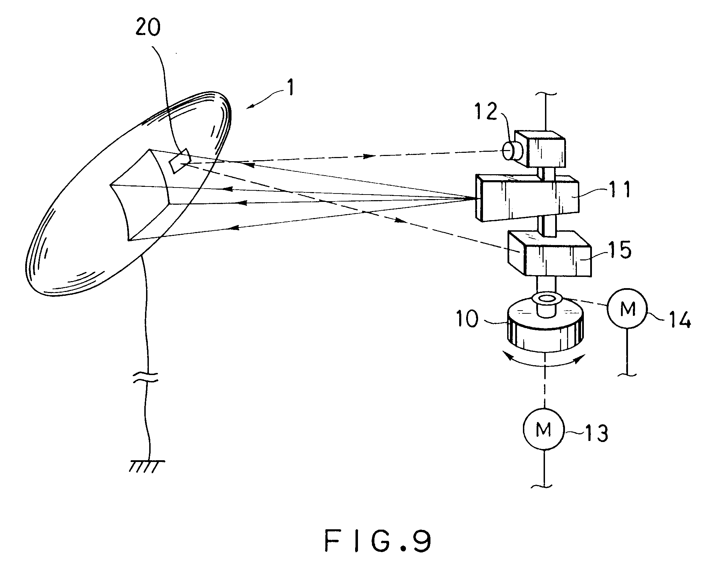

Although the embodiment described above represents the case that an infrared ray radiating member 2 is set at the position beyond the image projecting region, an infrared ray radiating member can be set within the image projecting region and visible light can be applied to the light emitting member. When a visible light is applied to the light emitting member, a normal kind of an image pick-up means is available. Further, another configuration as shown in FIG.9 may be also available for the automatic follow-up projection system wherein an infrared ray reflective medium 20 is mounted in place of the infrared ray radiating member 2 and an infrared ray irradiating unit 15 is provided on the electrically-driven turn table 10, so that an infrared ray image pick-up unit 12 can catch light amount of the reflected infrared rays from the infrared ray reflective medium 20. Visible light can be also applied to this embodiment. Moreover, the configurations of the blocks as shown in FIG.5 and FIG.6 are not limited by this embodiment. In case that the follow-up operation is carried out using the infrared rays, the effect is considerably preferable, particularly at night because the light for the automatic follow-up is invisible.

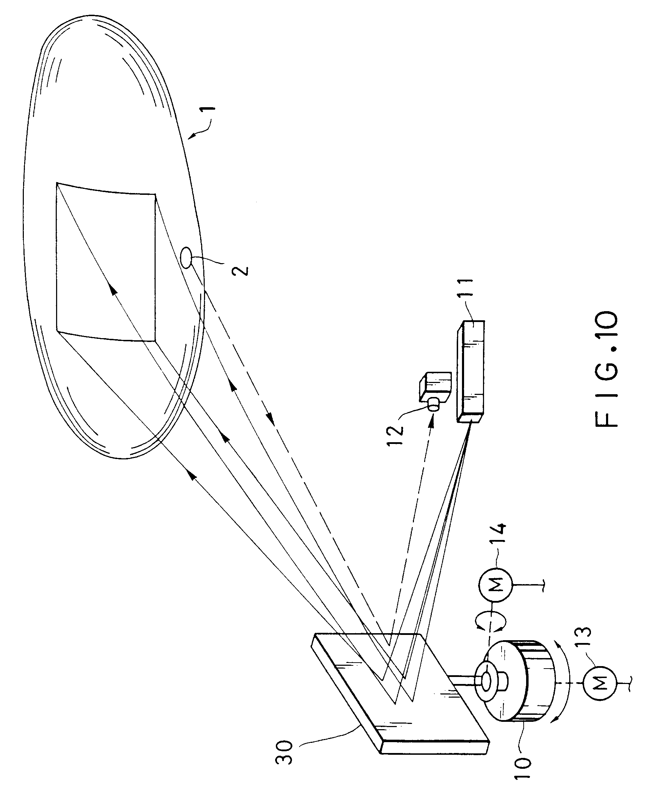

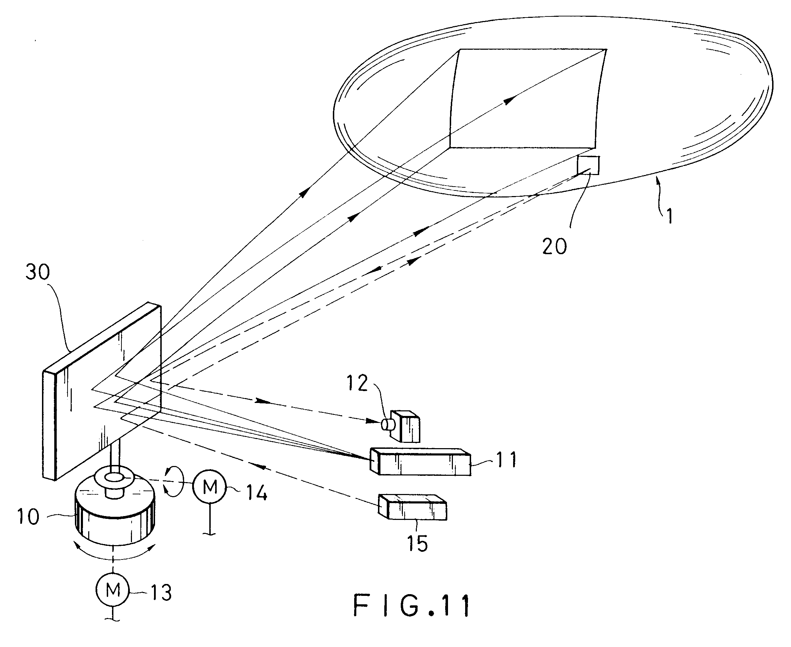

In the above description, the image projecting unit 11, the infrared ray image pick-up unit 12 and an infrared ray irradiating unit 15 are attached to the electrically-driven turn table 10, therefore it is difficult to control in direction the system directly by the electrically-driven turn table 10 when these units are large sized or overweighted. To deal with this, as shown in FIG.10 or FIG.11 a mirror 30 such as surface-evaporated mirror or the like is adapted to be attached to the electrically-driven turn table 10 while the image projecting unit 11, the infrared ray image pick-up unit 12 and the infrared ray irradiating unit 15 may be fixed at a separated place. In this case, an incident image also reaches through the reflection of the mirror 30 to the infrared ray image pick-up unit 12, yet the control of the mirror 30 is carried out in the same way when a mirror is not applied.

It is noted that this invention can be applied to a camera capable of automatically following a subject by using a camera for film, video or the like in place of the image projecting unit 11.

As mentioned above, the use of the automatic follow-up projection system according to this invention requires no operator, and allows a high speed, responsive smooth tracking. Because the system can steadily track a moving object to project an image thereon, it is possible that an advertising image may be projected onto an airship or a balloon, alternatively news may be announced with a character image and/or animation being projected, and many other variations of the applications can be expected according to this invention.

It should be understood that many modifications and adaptations of the invention will become apparent to those skilled in the art and it is intended to encompass such obvious modifications and changes in the scope of the claims appended hereto.

## Claims

1. An automatic follow-up projection system comprising; a turntable (10) pivotable arbitrarily in vertical and horizontal directions in response to a movement of a moving object (1) having a light emitting member (2), an image projecting unit (11) fixed to said turntable (10), having directivity so as to project an image at a predetermined position on said moving object (1), an image pick-up means (12) having a field of view catching light from said light emitting member (2), a calculating control means (100) connected to said image pick-up means (12) and said turntable (10), in order to drive and control said turntable by processing light quantitity signals obtained from said light emitting member (2) by said image pick-up means (12) and calculating the tracking of said moving object (1).

2. An automatic follow-up projection system according to Claim 1, wherein said light emitting member (2) is an infrared ray radiating member and said image pick-up means (12) is an infrared ray image pick-up means.

3. An automatic follow-up projection system according to Claim 1 or 2, wherein said moving object (1) is an airship or a balloon and said predetermined position is not overlapped with said infrared ray radiating member.

4. An automatic follow-up projection system comprising; a turntable (10) pivotable arbitrarily in vertical and horizontal directions in response to a movement of a moving object (1) having a reflective member (20), an image projecting unit (11) fixed to said turntable (10), having directivity so as to project an image at a predetermined position on said moving object (1), an infrared ray irradiating means (15) fixed to said turntable (10) in order to irradiate infrared rays onto said reflective member (20), an infrared ray image pick-up means (12) having a field of view catching infrared rays from said reflective member (20), a calculating control means (100) connected to said infrared ray image pick-up means (12) and said turntable (10) in order to drive and control said turn table (10) by processing the amount of infrared rays obtained from said reflective member (20) by said infrared ray image pick-up means (12) and calculating the tracking of said moving object (1).

5. An automatic follow-up projection system according to Claim 4, wherein said reflective member (20) is a mirror or a tape mounted on the moving object.

6. An automatic follow-up projection system according to Claim 5, wherein said predetermined position is not overlapped with said mirror or tape.

7. An automatic follow-up projection system comprising; a turntable (10) pivotable arbitrarily in vertical and horizontal directions in response to a movement of a moving object (1) having a light emitting member (2), a mirror (30) attached to said turntable (10), an image projecting unit (11) being directed so as to project an image at a predetermined position on said moving object by way of said mirror, an image pick-up means (12) having a field of view catching light from said light emitting member (2) by way of said mirror (30), a calculating control means (100) connected to said image pick-up means (12) and said turntable (10) in order to drive and control said turntable (10) by processing light quantity signals obtained from said light emitting member (2) by said image pick-up means (12) and calculating the tracking of said moving object.

8. An follow-up projection system according to Claim 7, wherein a reflective member (20) is applied in place of said light emitting member (2) and a light irradiating means (15) for irradiating light to said reflective member (20) by way of said mirror (30) is applied.

9. An automatic follow-up projection system according to Claim 7 or 8, wherein said image projecting unit (11) and image pick-up means (12) are respectively fixed at a predetermined place and said mirror (30) attached to said turntable (10) is far from said image projecting unit (11) and image pick-up means 12.

## Patentansprüche

1. Automatisches Nachführ-Projektionssystem, umfassend: einen Drehtisch (10), der wahlweise in vertikaler und horizontaler Richtung ansprechend auf eine Bewegung eines sich bewegenden, mit einen lichtemittierenden Element (2) ausgestatteten Objekt beliebig drehbar ist, eine Bildprojektionseinheit (11), die auf dem Drehtisch (10) befestigt ist und eine solche Orientierung besitzt, daß sie ein Bild auf eine vorbestimmte Position auf dem sich bewegenden Objekt (1) projiziert, eine Bildaufnahmeeinrichtung (12) mit einem Gesichtsfeld, welches Licht von dem lichtemittierenden Element (2) aufnimmt, eine Berechnungssteuereinrichtung (100), die an die Bildaufnahmeeinrichtung (12) und an den Drehtisch (10) gekoppelt ist, um den Drehtisch anzutreiben und zu steuern, indem von dem lichtemittierenden Element (2) durch die Bildaufnahmeeinrichtung (12) erhaltene Bildmengensignale verarbeitet und der Wegverlauf des sich bewegenden Objekts (1) berechnet wird.

2. Automatisches Nachführ-Projektionssystem nach Anspruch 1, bei dem das lichtemittierende Element ein Infrarotstrahlen abstrahlendes Element und die Bildaufnahmeeinrichtung (12) eine Infrarotstrahl-Bildaufnahmeeinrichtung ist.

3. Automatisches Nachführ-Projektionssystem nach Anspruch 1 oder 2, bei dem das sich bewegende Objekt (1) ein Flugzeug oder ein Ballon ist, und sich die vorbestimmte Position nicht mit dem einen Infrarotstrahl abstrahlenden Element überlappt.

4. Automatisches Nachführ-Projektionssystem, umfassend: einen Drehtisch (10), der beliebig in vertikaler und horizontaler Richtung ansprechend auf eine Bewegung eines sich bewegenden Objekts (1), welches ein reflektierendes Element (20) besitzt, drehbar ist, eine Bildprojektionseinheit (11), die auf dem Drehtisch (10) befestigt ist und eine solche Orientierung besitzt, daß sie ein Bild auf eine vorbestimmte Position auf dem sich bewegenden Objekt (1) zu projezieren vermag, eine Infrarotstrahl-Abstrahleinrichtung (15), die auf dem Drehtisch (10) befestigt ist, um Infrarotstrahlen auf das reflektierende Element (20) zu strahlen, eine Infrarotstrahl-Bildaufnahmeeinrichtung (12) mit einem Gesichtsfeld, welches von dem reflektierenden Element (20) kommende Infrarotstrahlen aufnimmt, eine Berechnungssteuereinrichtung (100), die an die Infrarotstrahl-Bildaufnahmeeinrichtung (12) und an den Drehtisch (10) angeschlossen ist, um den Drehtisch (10) anzutreiben und zu steuern, indem die Menge an Infrarotstrahlen, die von dem reflektierenden Element (20) durch die Infrarotstrahl-Bildaufnahmeeinrichtung (12) erhalten wird, verarbeitet wird und der Wegverlauf des sich bewegenden Objekts (1) berechnet wird.

5. Automatisches Nachführ-Projektionssystem nach Anspruch 4, bei dem das reflektierende Element (20) ein an dem sich bewegenden Objekt angeordneter Spiegel oder ein Band ist.

6. Automatisches Nachführ-Projektionssystem nach Anspruch 5, bei dem die vorbestimmte Position sich nicht mit dem Spiegel oder dem Band überlappt.

7. Automatisches Nachführ-Projektionssystem, umfassend: einen Drehtisch (10), der willkürlich in vertikaler und horizontaler Richtung ansprechend auf eine Bewegung eines sich bewegenden, mit einem lichtemittierenden Element (2) versehenden Objekt (1) drehbar ist, einen an dem Drehtisch (10) befestigten Spiegel (30), eine Bildprojektionseinheit (11), die so gerichtet ist, daß sie ein Bild auf eine vorbestimmte Position auf dem sich bewegenden Objekt mit Hilfe des Spiegels projiziert, eine Bildaufnahmeeinrichtung (12) mit einem Gesichtsfeld, welches von dem lichtemittierenden Element (2) kommendes Licht über den Spiegel (30) aufnimmt, eine Berechnungssteuereinrichtung (100), die an die Bildaufnahmeeinrichtung (12) und an den Drehtisch (10) angeschlossen ist, um den Drehtisch (10) anzutreiben und zu steuern, indem Lichtmengensignale verarbeitet werden, die von dem lichtemittierenden Element (2) über die Bildaufnahmeeinrichtung (12) erhalten werden, und indem der Wegverlauf des sich bewegenden Objekts berechnet wird.

8. Nachführ-Projektionssystem nach Anspruch 7, bei dem ein reflektierendes Element (20) an der Stelle des lichtemittierenden Elements (2) vorgesehen ist und eine lichtabstrahlende Einrichtung (15) zum Strahlen von Licht auf das reflektierende Element (20) über den Spiegel (30) vorgesehen ist.

9. Automatisches Nachführ-Projektionssystem nach Anspruch 7 oder 8, bei dem die Bildprojektionseinheit (11) und die Bildaufnahmeeinrichtung (12) jeweils an einer vorbestimmten Stelle angeordnet sind und der Spiegel (30), der an dem Drehtisch (10) angebracht ist, von der Bildprojektionseinheit (11) und der Bildaufnahmeeinrichtung (12) weit entfernt ist.

## Revendications

1. Système de projection avec suivi automatique comprenant: une table tournante (10) pouvant pivoter arbitrairement dans les directions verticale et horizontale en réponse au déplacement d'un objet mobile (1) ayant un élément (2) émetteur de lumière, une unité (11) de projection d'image fixée à ladite table tournante (10), ayant une certaine directivité de manière à projeter une image dans une position prédéterminée sur ledit objet mobile (1), un moyen (12) de prise de vues ayant un champ de visée captant de la lumière en provenance dudit élément (2) émetteur de lumière, un moyen (100) de commande de calcul connecté audit moyen (12) de prise de vues et à ladite table tournante (10), afin d'entraîner et de commander ladite table tournante en traitant des signaux de quantité de lumière obtenus à partir dudit élément (2) émetteur de lumière par ledit moyen (12) de prise de vues, et en calculant le suivi dudit objet mobile (1).

2. Système de projection avec suivi automatique selon la revendication 1, dans lequel ledit élément (2) émetteur de lumière est un élément radiant à rayons infrarouges et ledit moyen (12) de prise de vues est un moyen de prise de vues à rayons infrarouges.

3. Système de projection avec suivi automatique selon la revendication 1 ou 2, dans lequel ledit objet mobile (1) est un dirigeable ou un ballon et ladite position prédéterminée n'est pas recouverte par ledit élément radiant à infrarouges.

4. Système de projection avec suivi automatique comprenant: une table tournante (10) pouvant pivoter arbitrairement dans des directions verticale et horizontale en réponse au déplacement d'un objet mobile (1) ayant un élément de réflexion (20), une unité (11) de projection d'image fixée à ladite table tournante (10), ayant une certaine directivité de manière à projeter une image dans une position prédéterminée sur ledit objet mobile (1), un moyen (15) d'irradiation de rayons infrarouges fixé à ladite table tournante (10) afin d'irradier des rayons infrarouges sur ledit élément de réflexion (20), un moyen (12) de prise de vues à rayons infrarouges ayant un champ de visée captant des rayons infrarouges en provenance dudit élément de réflexion (20), un moyen (100) de commande de calcul connecté audit moyen (12) de prise de vues à rayons infrarouges et à ladite table tournante (10), afin d'entraîner et de commander ladite table tournante (10) en traitant la quantité de rayons infrarouges obtenus à partir de l'élément de réflexion (20) par ledit moyen (12) de prise de vues à rayons infrarouges, et en calculant le suivi dudit objet mobile (1).

5. Système de projection avec suivi automatique selon la revendication 4, dans lequel ledit élément de réflexion (20) est un miroir ou une bande monté sur l'objet mobile.

6. Système de projection avec suivi automatique selon la revendication 5, dans lequel ladite position prédéterminée n'est pas recouverte par ledit miroir ou ladite bande.

7. Système de projection avec suivi automatique comprenant: une table tournante (10) pouvant pivoter arbitrairement dans des directions verticale et horizontale en réponse au déplacement d'un objet mobile (1) ayant un élément (2) émetteur de lumière, un miroir (30) fixé à ladite table tournante (10), une unité (11) de projecticn d'image étant dirigée de manière à projeter une image dans une position prédéterminée sur ledit objet mobile à l'aide dudit miroir, un moyen (12) de prise de vues ayant un champ de visée captant de la lumière en provenance dudit élément (12) émetteur de lumière à l'aide dudit miroir (30), un moyen (100) de commande de calcul connecté audit moyen (12) de prise de vues et à ladite table tournante (10), afin d'entraîner et de commander ladite table tournante (10) en traitant des signaux de quantité de lumière obtenus à partir de l'élément (2) émetteur de lumière par ledit moyen (12) de prise de vues et en calculant le suivi dudit objet mobile.

8. Système de projection avec suivi automatique selon la revendication 7, dans lequel un élement de réflexion (20) est appliqué à la place dudit élément (2) émetteur de lumière et un moyen (15) d'irradiation de la lumière pour irradier de la lumière vers ledit élément (20) de réflexion à l'aide dudit miroir (30) est appliqué.

9. Système de projection avec suivi automatique selon la revendication 7 ou 8, dans lequel ladite unité (11) de projection d'image et ledit moyen (12) de prise de vues sont respectivement fixés en un emplacement prédéterminé et ledit miroir (30) fixé à ladite table tournante (10) est éloigné de ladite unité (11) de projection d'image et dudit moyen (12) de prise de vues.
